Europäisches Patentamt

European Patent Office

Office européen des brevets

(11) Publication number: **0 485 604 A1**

# EUROPEAN PATENT APPLICATION
## published in accordance with Art. 158(3) EPC

(21) Application number: 90908669.6

(22) Date of filing: **30.05.90**

(86) International application number:
**PCT/JP90/00698**

(87) International publication number:
**WO 91/18763 (12.12.91 91/28)**

(51) Int. Cl.⁵: **B60R 21/16**

(43) Date of publication of application:
**20.05.92 Bulletin 92/21**

(84) Designated Contracting States:
**DE FR GB**

(71) Applicant: **TAKATA KABUSHIKI KAISHA**
**4-30, Roppongi 1-chome**
**Minato-ku, Tokyo 106(JP)**

(72) Inventor: **NAKAJIMA, Hideo,915-29, Hida-cho**
**Hikone-shi**
**Shiga 521-11(JP)**

(74) Representative: **Bubb, Antony John Allen et al**
**GEE & CO. Chancery House Chancery Lane**
**London WC2A 1OU(GB)**

(54) **AIR BAG IN AIR BAG UNIT.**

(57) An air bag of an air bag unit provided with an opening (9) through which an inflator actuated in an emergency penetrates and with exhaust ports (8) for discharging the internal pressure of the air bag around this opening (9), wherein the ports (8) are formed at those portions where warps (11) and wefts (10) of a woven fabric cross obliquely with respect to the line connecting the center of each of these ports (8) to the center of the opening (9). Accordingly, the stress occurring around the exhaust port (8) is supported by both the warps (11) and wefts (10) of the woven fabric of the air bag (3) and breakage around the periphery of the exhaust port (8) is less likely to occur than in the conventional air bags wherein this stress is supported by the warps or wefts alone. For this reason, breakage of the air bag (3) around the exhaust port (8) can be prevented without fail and the reliability of the air bag (3) can be improved drastically.

FIG. 1(B)

FIG. 1(C)

EP 0 485 604 A1

# FIG. 1(A)

## FIELD OF THE INVENTION

The present invention relates to an air bag in an air bag unit for protecting an occupant in a vehicle by inflating with high pressure when the vehicle is collided, and in particular to an air bag, which is provided with exhaust holes to slowly discharge the gas in order to alleviate the shock which occurs when the occupant is collided against the air bag.

## TECHNICAL BACKGROUND

The air bag unit installed on the fixed portion of car body in front of seat in a vehicle plays an important role in the protection of the occupant from injury caused by the collision against car body as it is instantaneously inflated by the pressure of combustion gas released from an inflator, which is fixed on steering wheel or on dashboard.

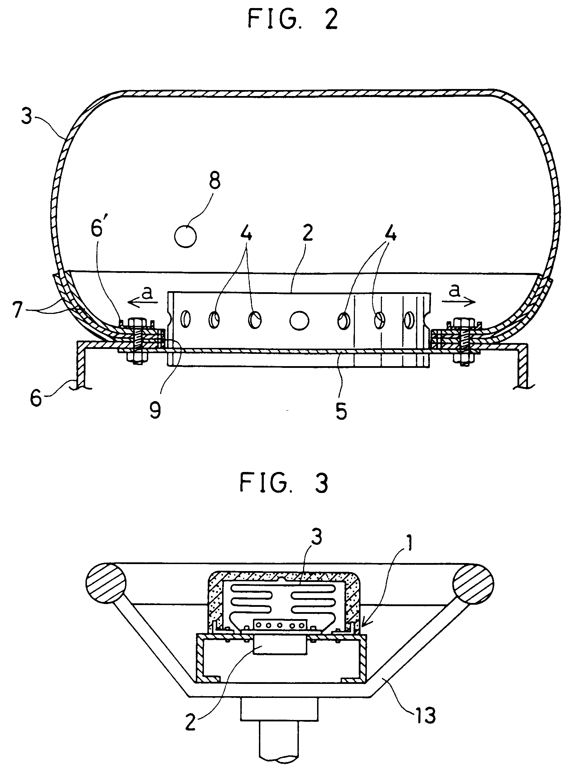

As shown in Fig. 3, such air bag unit 1 comprises an inflator, which is exploded by collision signal from a collision detecting sensor and explodes gas generating agent when the deceleration of the vehicle exceeds a certain level, and an air bag 3 with its base fixed on the inflator 2 and inflated by the gas coming out of the inflator 2. This air bag unit 1 can be mounted, for example, on the fixed portion of car body such as central portion of the steering wheel 13 with the air bag 3 folded up and placed in a pad.

When the vehicle is collided, gas generating agent in the inflator 2 is exploded and the air bag 3 is instantaneously inflated and expanded by the generated gas as shown in Fig. 2.

As the result, the air bag 3 receives the occupant, who is pushed forward by inertia and protects the occupant from the injury caused by the collision against car body.

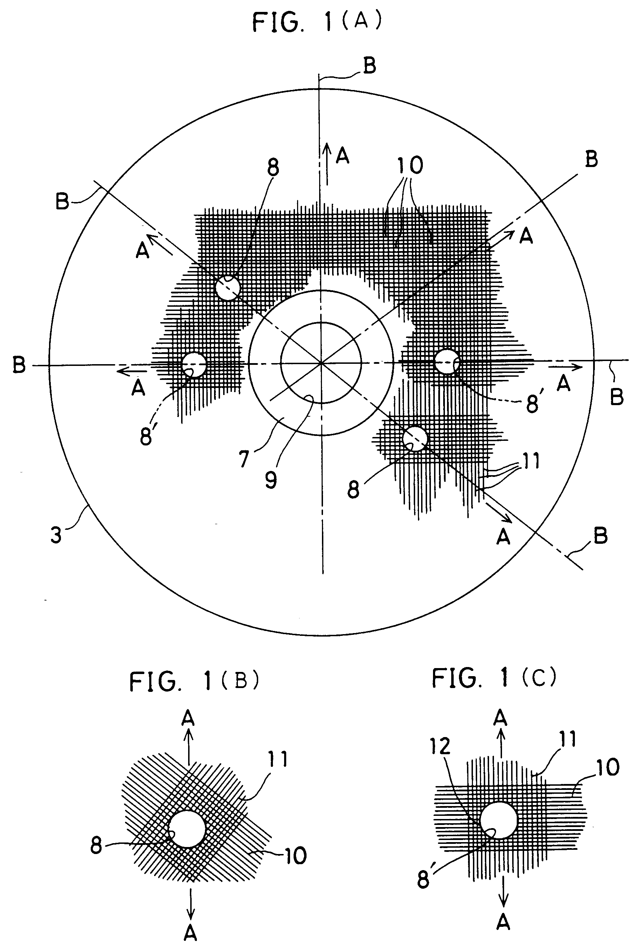

A conventional type air bag 3 comprises an opening 9, through which the inflator penetrates, and exhaust holes 8' (shown by two-dot chain lines Fig. 1 (A)) to release the pressure in the air bag and to alleviate the shock when the occupant is collided against the inflated air bag. The dimension of these exhaust holes 8' is adequately determined in order to absorb the shock most effectively, which occurs when the occupant is collided against the air bag 3.

When the air bag 3 is inflated, high tensile force A occurs on the base cloth of the air bag 3 in radial direction from the opening 9 of the air bag 3 by high pressure gas blown out of the inflator 2. By this tensile force A, stress is concentrated around said exhaust holes 8', and there is the possibility that the air bag 3 may be ruptured 12 from the exhaust holes 8' as shown in Fig. 1 (C). The rupture 12 also occurs by the shock when the occupant is collided against the air bag. When such rupture 12 occurs, a large quantity of gas is released through the ruptured hole 12, and the function of the air bag to alleviate the shock is not fulfilled.

To solve the above problem, study is now made on the exhaust holes 8' of the air bag 3. As shown in Figs. 1 (A) and (C), the exhaust holes 8' are furnished at the positions where warps 11 or wefts 10 of the air bag 3 run in parallel to the straight line B which connects the center of the opening 9 of the air bag with the centers of the exhaust holes 8'. As the result, the above tensile force A is intensively applied either on warps 11 or on wefts 10 as shown by the arrow A in Fig. 1 (A). Therefore, warps 11 or wefts 10 are broken off as stress is intensively applied as shown in Fig. 1 (C), and the rupture occurs around the exhaust holes 8.

To solve the above problems, the object of the present invention is to offer an air bag, which can prevent the rupture of the air bag from the portion of exhaust holes when the air bag is inflated or the occupant is collided against the air bag.

## DISCLOSURE OF THE INVENTION

To solve the above problems, the air bag according to the present invention is characterized in that the exhaust holes are provided at the positions where warps and wefts of the woven cloth of the air bag run diagonally to the straight line, which connects the centers of said exhaust holes with the center of said opening.

In an air bag according to the present invention with such arrangement, when the air bag is inflated by the gas blown out from the inflator or when the occupant is collided against the air bag by inertia, the stress generated around the exhaust holes is supported by both warps and wefts of the woven cloth of the air bag. As the result, compared with the convention case where the stress is supported only by either warps or wefts, rupture occurs less frequently around the exhaust holes of the air bag. Therefore, the rupture around the exhaust holes of the air bag can be prevented, and this extensively increases the reliability of the air bag.

BRIEF DESCRIPTION OF THE DRAWINGS

Fig. 1 (A) is a cross-sectional view of an air bag when it is inflated and expanded;
Fig. 1 (B) is an enlarged view of an exhaust hole of the air bag according to the present invention;
Fig. 1 (C) is an enlarged view of an exhaust hole of a conventional type air bag;
Fig. 2 is a cross-sectional view of an air bag of an air bag unit commonly in use when it is inflated and expanded; and
Fig. 3 is a schematical cross-sectional view showing an example of an air bag unit when it is mounted on steering wheel.

DETAILED DESCRIPTION OF THE PREFERRED EMBODIMENT

As shown in Fig. 2, air bag unit 1 normally comprises an inflator 2 and an air bag 3. The inflator 2 is formed in thin cylindrical shape where gas generating agent is sealed in. On its lateral side, a plurality of gas blowing holes 4, 4, ..... are provided in peripheral direction with adequate spacings.

On outer periphery of the inflator 2, a flange 5 is furnished outside the gas blowing holes 4, and this flange 5 is mounted on an air bag holder 6. The base of the air bag 3 is fixed on the holder 6 so that the gas blowing holes 4, 4, ..... are enclosed by the air bag 3.

As shown in Fig. 1 (A), the air bag 3 is made of flexible and airtight material, which is a woven cloth made up from warps 11 and wefts 10 and coated with rubber or synthetic resin, and its center is provided with an opening 9, through which the inflator 2 is penetrating. Reinforcement cloths 7 are overlapped around this opening 9 and are integrally bonded or sewn together for reinforcement.

On the periphery of the mount of the air bag 3, a pair of exhaust holes 8 and 8 are furnished at symmetrical points from the center of the opening 9. As it is evident from Figs. 1 (A) and (B), the exhaust holes 8 and 8 are located at the sites where the warps 11 and the wefts 10 of the woven cloth of the air bag 3 cross diagonally the straight line B, which connects the center of the opening 9 with the centers of the exhaust holes 8.

In an air bag 3 with the above arrangement, the inflator 2 is penetrating through the opening as in the conventional case as shown in Fig. 2 and Fig. 3, and it is airtightly mounted on the inflator 2 by bolts and nuts with the portion around the opening and the reinforcement cloths 7 squeezed by ring-like hardware 6' and the holder 6.

Next, description is given on the operation of this embodiment.

When the vehicle is collided against an obstacle and the deceleration exceeds a certain level, collision signal is issued by a collision detecting sensor (not shown), and the gas generating agent in the inflator 2 is exploded by this signal. As the result, gas is generated, and the generated gas is blown out of the blowing holes 4 as shown by the arrow "a" in Fig. 2.

The gas thus blown out inflates and expands instantaneously the air bag 3, which safely receives the occupant of the vehicle, who is pushed forward by inertia. In this case, gas is released from the exhaust holes 8 on the air bag 3 at adequate speed, and this alleviates the shock, which occurs when the occupant is collided against the air bag 3.

When the air bag 3 is rapidly inflated, or when the occupant is collided against the air bag, stress concentration occurs around the exhaust holes 8 by the tensile force A, which is generated in radial direction from the center of the opening 9 of the air bag 3. However, on the woven cloth around the exhaust holes 8, both warps 11 and the wefts 10 are crossing diagonally relative to the direction, in which tensile force A works, and the tensile force A is perfectly supported by both warps 11 and the wefts 10. Accordingly, even when such tensile force A occurs, it is possible to perfectly prevent the rupture 12, which is very likely to occur around the exhaust holes 8.

Table 1 shows the results of the tensile test. In Table 1, Type 1 sample has the exhaust holes 8' at such points, where either warps or wefts of woven cloth of the air bag are in parallel to the straight line, which connects the center of the opening 9 of the air bag with the centers of the exhaust holes 8' as shown in Figs. 1 (A) and (C). Type 2 sample is an example of the air bag according to the present invention, in which exhaust holes are furnished at the points, where both warps and wefts of woven cloth of the air bag cross the straight line, which connects the center of the opening 9 of the air bag with the centers of the exhaust holes 8', at approximately 45 degrees. In this case, the diameter is 32 mm in both of the exhaust holes. The figures in Table 1 represent tensile load at the moment when slit occurs on the exhaust holes.

As it is evident from Table 1, Type 2 has the tensile strength by abot 1.4 times higher than that of Type 1. In this way, the strength of the air bag according to the present invention is extensively improved compared with the conventional type air bag.

4

In case the portion around the exhaust holes 8 of the air bag 3 is reinforced by reinforcement cloths as necessary, the exhaust holes 8 can be more effectively reinforced if the exhaust holes 8 are provided on the reinforcement cloths at the same points as in the present invention.

Table 1    Results of tensile strength test for woven cloth
of air bag with exhaust hole

| Sample No. | Type 1 (N) | Type 2 (N) |
|------------|------------|------------|
| 1 | 1,441 | 2,098 |
| 2 | 1,588 | 2,196 |
| 3 | 1,519 | 2,127 |
| Average | 1,516 | 2,140 |

APPLICABILITY IN THE INDUSTRY

The air bag in the air bag unit of the present invention can be used in a vehicle and applied for the protection of the occupant by absorbing the shock, which occurs when the vehicle is collided.

**Claims**

1.  An air bag in an air bag unit, comprising an opening, where an inflator to be operated in an emergency is penetrating, and exhaust holes to release the pressure within the air bag around said opening, characterized in that said exhaust holes are provided at such positions where both warps and wefts of woven cloth of the air bag diagonally cross the straight line, which connects the centers of the exhaust holes with the center of said opening.

# FIG. 1(A)

# FIG. 1(B)

# FIG. 1(C)

FIG. 2

FIG. 3

# INTERNATIONAL SEARCH REPORT

International Application No PCT/JP90/00698

| I. CLASSIFICATION OF SUBJECT MATTER (if several classification symbols apply, indicate all) 6 |
|---|

According to International Patent Classification (IPC) or to both National Classification and IPC

Int. Cl$^5$ B60R21/16

## II. FIELDS SEARCHED

Minimum Documentation Searched 7

| Classification System | Classification Symbols |
|---|---|
| IPC | B60R21/16-21/32 |

Documentation Searched other than Minimum Documentation
to the Extent that such Documents are Included in the Fields Searched 8

| | |
|---|---|
| Jitsuyo Shinan Koho | 1964 - 1990 |
| Kokai Jitsuyo Shinan Koho | 1971 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 52-5126 (Arakawa Autobody Co., Ltd.), 14 January 1977 (14. 01. 77), Lines 12 to 14, upper left column, page 2 (Family: none) | 1 |
| Y | JP, U, 50-131735 (Asahi Chemical Industry Co., Ltd.), 29 October 1975 (29. 10. 75), Fig. 2 (Family: none) | 1 |
| A | JP, Y2, 54-3484 (Asahi Chemical Industry Co., Ltd.), 17 February 1979 (17. 02. 79), Lines 16 to 21, column 2 (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 20, 1990 (20. 08. 90) | September 3, 1990 (03. 09. 90) |

| International Searching Authority | Signature of Authorized Officer |
|---|---|
| Japanese Patent Office | |

Form PCT/ISA/210 (second sheet) (January 1985)